# EUROPÄISCHE PATENTANMELDUNG

(11) **EP 1 231 492 A1**
(43) Veröffentlichungstag der Anmeldung: **14.08.2002**
(21) Anmeldenummer: 01810145.1
(22) Anmeldetag: 13.02.2001
(51) Int. Cl.: G02B 6/44

(54) **Ausstiegskasten für Lichtwellenleiternetze der Telekommunikations- und Datentechnik**

(71) Anmelder: Colt Telecom AG, 8048 Zürich (CH)
(72) Erfinder: De Steffani, Thomas, 8952 Schlieren (CH)
(74) Vertreter: Groner, Manfred

(57) **Zusammenfassung**

Der Ausstiegskasten weist ein Gehäuse (2) auf, das wenigstens einen Eingang (3) für ein Glasfaserkabel (5) und einen Ausgang (4) für das Glasfaserkabel (5) besitzt. Im Gehäuse (2) sind Spleisskassetten (6) gelagert. In einem Aufteilbereich (7) ist das Glasfaserkabel (5) aufgeteilt. Kabelführungen (20) zur Führung der zu Bündeln (12) zusammengefassten Glasfasern sorgen für die Einhaltung von Mindestradien. Im Gehäuse (2) sind mehrere jeweils mit einem Deckel (10) verschliessbare und abschliessbare Kundenspleisskästen (9) angeordnet, in denen jeweils wenigstens eine Spleisskassette (6) untergebracht ist. Der Aufteilbereich (7) des Glasfaserkabels (5) ist im Gehäuse (2) geschützt angeordnet.

Vorzugsweise ist der Aufteilbereich (7) hinter den Kundenspleisskästen (9) angeordnet.

## Beschreibung

Die Erfindung betrifft einen Ausstiegskasten für Lichtwellenleiternetze der Telekommunikations- und Datentechnik, mit einem Gehäuse, das einen Eingang für ein Glasfaserkabel und einen Ausgang für das Glasfaserkabel aufweist, mit mehreren im Gehäuse gelagerten Spleisskassetten, mit einem Aufteilbereich, in welchem das Glasfaserkabel aufgeteilt ist und mit Kabelführungen zur Führung der zu Bündeln zusammengefassten Glasfasern, die für die Einhaltung von Mindestradien sorgen.

Ausstiegskästen dieser Art sind bekannt. Sie sind beispielsweise im Feld in einem Schacht angeordnet und enthalten in den Kassetten Spleissreserven, die hier bruchsicher und leicht manipulierbar aufbewahrt sind. Für weitere Abgänge kann der Ausstiegskasten beispielsweise an einem Rahmen aus dem Schacht herausgenommen und die gewünschten Kabel können in der entsprechenden Spleisskassette eingespleisst werden. Sind die Spleissarbeiten abgeschlossen, wird der Ausstiegskasten wieder im Schacht versenkt. Bei solchen Ausstiegskästen müssen alle Grundlagen der Glasfasertechnik berücksichtigt werden. Insbesondere sind zu enge Biegeradien oder Zug sowie Druck auf die Glasfasern zu vermeiden.

Die DE 35 40 472 A offenbart eine Vorrichtung zur Aufbewahrung der Fasern von Glasfaserkabeln in Verteilereinrichtungen im Fernmeldenetz. Bei dieser sind in einem Gehäuse nebeneinander mehrere Kassettenkästen angeordnet, die zum Einspleissen ausklappbar sind. Dies soll eine zweckmässige Aufbewahrung der Enden der Glasfaserkabel ermöglichen. Zudem soll eine einfache Handhabung und geringer Raumbedarf gewährleistet sein.

Bei Ausstiegskästen, an denen jeweils mehrere Kunden berechtigt sind, werden besonders hohe Anforderungen an die Sicherheit gegen Fehlmanipulationen gestellt. Der Erfindung liegt nun die Aufgabe zugrunde, einen Ausstiegskasten der genannten Art zu schaffen, der eine besonders hohe Sicherheit gegen Fehlmanipulationen gewährleistet.

Die Aufgabe ist bei einem gattungsgemässen Ausstiegskasten dadurch gelöst, dass im Gehäuse mehrere jeweils mit einem Deckel verschliessbare und abschliessbare Kundenspleisskästen angeordnet sind, in denen jeweils wenigstens eine Spleisskassette untergebracht ist und dass der Aufteilbereich des Glasfaserkabels im Gehäuse geschützt angeordnet ist.

Beim erfindungsgemässen Ausstiegskasten kann jedem Kunden ein eigener Kundenspleisskasten zugeteilt werden. Dieser Kunde hat mit seinem eigenen Schlüssel lediglich zu seinem Kundenspleisskasten Zugang. Der Aufteilbereich des Glasfaserkabels ist keinem der Kunden zugänglich, sondern lediglich dem Besitzer des Lichtwellenleiternetzes. Für jeden der Kunden ist damit sichergestellt, dass an seinem Anteil des Glasfaserkabels durch Dritte keine Beschädigungen erfolgen können. Bei einer unsachgemässen Manipulation kann somit der Kunde lediglich seine eigenen Glasfasern beschädigen.

Ein besonders sicherer konstruktiv ohne grösseren Aufwand erreichbarer Schutz des Aufteilbereichs ist gemäss einer Weiterbildung der Erfindung dadurch möglich, dass der Aufteilbereich hinter den Kundenschränken geschützt angeordnet ist. Der Aufteilbereich ist dann somit durch die Kundenspleisskästen abgedeckt und für die Kunden nicht zugänglich.

Vorzugsweise ist das Glasfaserkabel spleissfrei als Schlaufe in eine Öffnung des Gehäuses eingeführt. In dieser Öffnung sind der Eingangs- und der Ausgangsbereich des Glasfaserkabels abgedichtet. Durch diesen spleissfreien Einbau des Glasfaserkabels werden Dämpfungen und entsprechende Lichtverluste am Ausstiegskasten vermieden.

Nach einer Weiterbildung der Erfindung ist vorgesehen, dass die Kundenspleisskästen jeweils in einer ersten hinteren Ebene eine Ablage für nicht benutzte Bündelader, eine zweite mittlere Ebene für später benützbare Bündelader und eine vordere dritte Ebene mit mehreren Kassettenträgern aufweist. Diese Aufteilung in mehrere Ebenen vermindert noch weiter die Gefahr von Beschädigungen an Glasfasern beim Einspleissen und insbesondere von Glasfaserbrüchen.

Vorzugsweise ist gemäss einer Weiterbildung der Erfindung jeder Kundenspleisskasten mit einem eigenen Schloss und Schlüssel versehen. Damit ist gewährleistet, dass ein Kunde lediglich an seinen eigenen Glasfasern arbeiten kann.

Weitere vorteilhafte Merkmale ergeben sich aus den abhängigen Patentansprüchen, der nachfolgenden Beschreibung sowie der Zeichnung.

Ein Ausführungsbeispiel des erfindungsgemässen Ausstiegskastens wird nachfolgend anhand der Zeichnung näher erläutert. Es zeigen:
- Fig. 1: schematisch eine Ansicht eines erfindungsgemässen Ausstiegskastens, wobei Teile weggelassen sind,
- Fig. 2: schematisch eine weitere Ansicht des Ausstiegskastens gemäss Fig. 1, wobei die Kundenspleisskästen verschlossen sind,
- Fig. 3: schematisch Ansichten von Teilen des Ausstiegskastens nach Fig. 1,
- Fig. 4: schematisch eine Ansicht von zwei Kundenspleisskästen,
- Fig. 5: eine Teilansicht des erfindungsgemässen Ausstiegskastens nach Fig. 1,
- Fig. 6: schematisch ein horizontaler Schnitt durch einen erfindungsgemässen Ausstiegskasten,

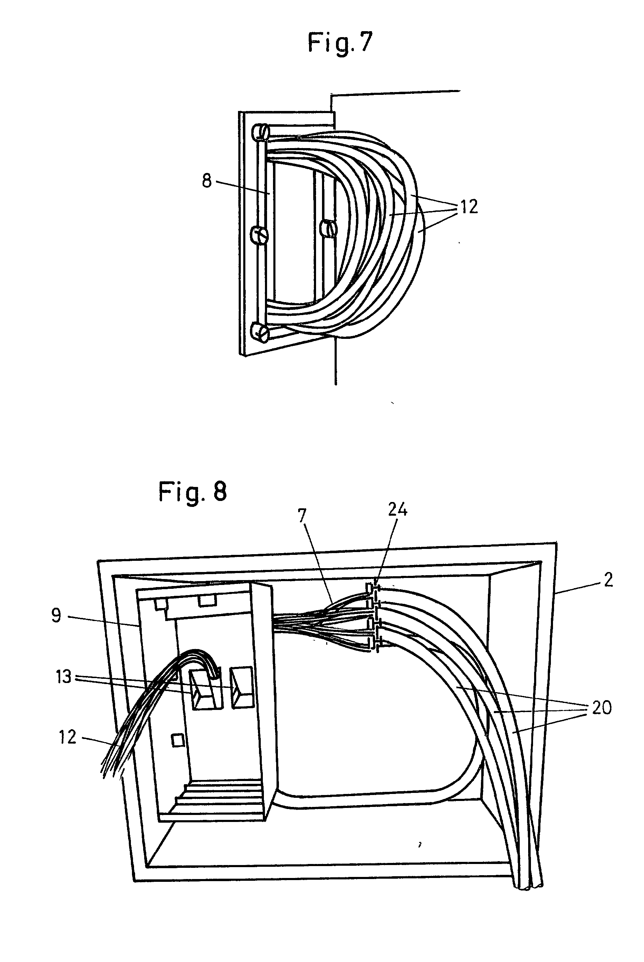

- Fig. 7: schematisch eine Teilansicht eines erfindungsgemässen Ausstiegskastens und
- Fig. 8: eine weitere Teilansicht des erfindungsgemässen Ausstiegskastens.

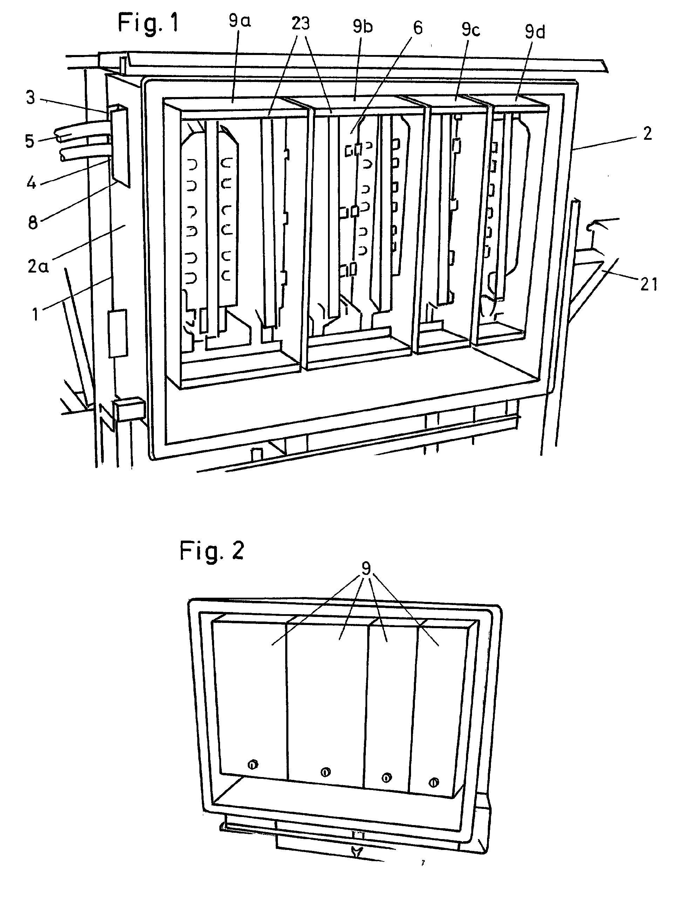

Der in Fig. 1 gezeigte Ausstiegskasten 1 ist an einem Rahmen 21 gelagert, an dem er in einen hier nicht gezeigten Schacht versenkbar und wieder aushebbar ist. Der Ausstiegskasten 1 weist ein beispielsweise aus Blech, glasfaserverstärktem PVC oder V4A-Stahl hergestelltes Gehäuse 2 auf, das frontseitig eine in Fig. 1 weggelassene verschliessbare Tür besitzt. Im Gehäuse 2 ist in der linken Seitenwandung 2a eine Öffnung 8 vorgesehen, durch welche ein Glasfaserkabel 5 als Schlaufe spleissfrei eingeführt ist. In die Öffnung 8 ist eine Dichtungsvorrichtung eingesetzt, welche den Eingangsbereich 3 sowie den Ausgangsbereichs 4 des Glasfaserkabels 5 gegenüber dem Gehäuse 2 wasserdicht abdichtet.

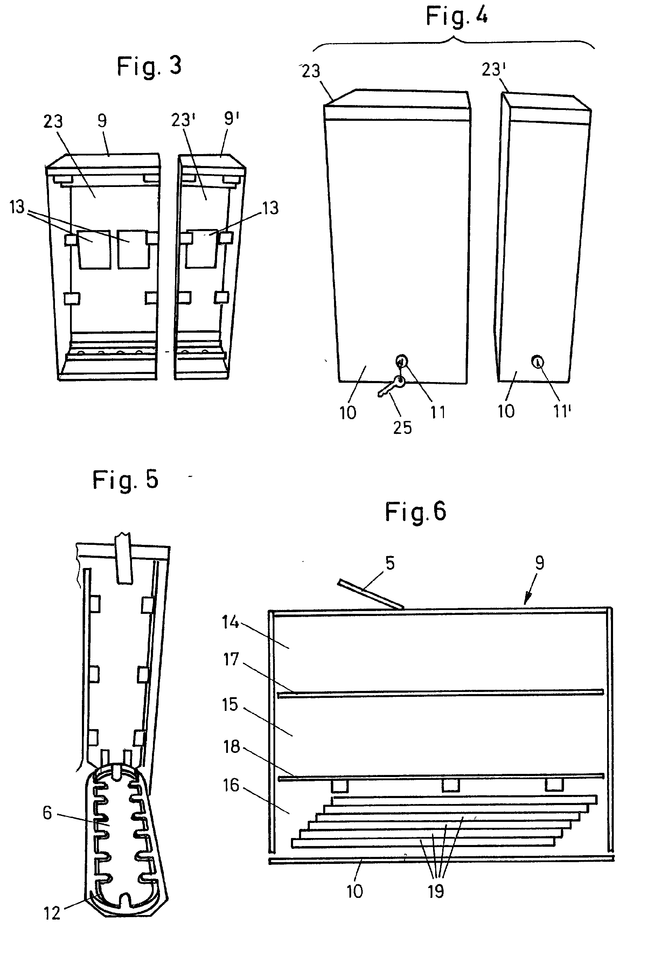

Im Gehäuse 2 sind mehrere Kundenspleisskästen 9a bis 9d befestigt, die jeweils ein eigenes Gehäuse 23 aus Blech aufweisen, in dem wenigstens eine an sich bekannte Spleisskassette 6 ausklappbar gelagert ist. Diese an sich bekannten Spleisskassetten ermöglichen eine bruchsichere Lagerung von Einzel- und Bündeladern, die jeweils mit einer Spleissreserve versehen sind. Bei ausgeklappter Kassette 6 kann an den Bündeladern 12 gearbeitet werden. Eine ausgeklappte Spleisskassette 6 ist in Fig. 5 gezeigt.

Die Fig. 3 zeigt schematisch zwei Gehäuse 23, bei denen jeweils die Spleisskassetten 6 noch nicht montiert sind. In einer Rückwand sind beim linken Gehäuse 23 zwei Öffnungen 13 ausgespart, durch welche gemäss Fig. 8 Bündelader 12 einzuführen sind. Beim rechten Gehäuse 23' ist lediglich eine solche Öffnung 13 vorgesehen. Diese Bündelader 12 sind in an sich bekannter Weise jeweils in die entsprechende Spleisskassette 6 eingelegt. Die Spleisskassetten 6 sind gemäss Fig. 6 jeweils in einem Kassettenträger 19 gelagert.

Die Gehäuse 23 sind wie in Fig. 6 gezeigt, durch Wandungen 17 und 18 jeweils in drei Ebenen 14, 15 und 16 unterteilt. Die Kassettenträger 19 mit den Spleisskassetten 6 sind in einer dritten Ebene 16 untergebracht. Frontseitig ist diese Ebene 16 mit einem Deckel 10 verschliessbar. Eine zweite mittlere Ebene 15 bildet eine Ablage für Bündelader 12, die später benutzt werden können. Die erste und hinterste Ebene 14 bildet eine Ablage für Bündelader 12, die nicht benutzt werden. Die Deckel 10 sind jeweils gemäss Fig. 4 mit einem Schloss 11 und einem zugehörigen Schlüssel 25 versehen.

Das in das Gehäuse 2 eingeführte Glasfaserkabel 5 ist gemäss Fig. 8 bereichsweise in flexiblen Schläuchen 20 geführt, die mit Kabelbindern 24 am Gehäuse 2 fixiert sind. Die Schläuche 20 bilden Kabelführungen, die gewährleisten, dass für die zusammengefassten Glasfasern die Mindestradien eingehalten werden. Dieser Aufteilbereich 7 befindet sich in einem Raum, der hinter den Kundenspleisskästen 9 angeordnet ist. Der Aufteilbereich 7 ist somit ohne ein Entfernen der Kundenspleisskästen 9 nicht zugänglich. Diese Kundenspleisskästen sind so im Gehäuse 2 befestigt, dass sie gegen eine Entnahme gesichert sind. In jeden der Kundenspleisskästen sind lediglich einige der Glasfasern des Glasfaserkabels 5 eingeführt. Dieser Anteil umfasst die Glasfasern, an denen einer der Kunden berechtigt ist und der lediglich zu seinem Kundenspleisskasten 9a, 9b, 9c oder 9d Zugang hat. Ist somit ein Kunde beispielsweise an den im Kundenspleisskasten 9c gelagerten Glasfasern berechtigt, so hat er über seinen Schlüssel 25 lediglich zu diesem Kasten 9c Zugang. Bei Arbeiten an diesen Glasfasern können entsprechend lediglich diese beschädigt werden. Da wie erläutert der Aufteilbereich 7 geschützt untergebracht ist, sind auch Beschädigungen in diesem Bereich nicht möglich. Im gezeigten Ausführungsbeispiel weist der Ausstiegskasten 1 vier Kundenspleisskästen 9a bis 9d auf. Es sind selbstverständlich auch Ausführungen denkbar, bei denen mehr oder weniger als vier Kundenspleisskästen 9 vorgesehen sind.

## Patentansprüche

1. Ausstiegskasten für Lichtwellenleiternetze der Telekommunikations- und Datentechnik, mit einem Gehäuse (2), das wenigstens einen Eingang (3) für ein Glasfaserkabel (5) und einen Ausgang (4) für das Glasfaserkabel (5) aufweist, mit mehreren im Gehäuse (2) gelagerten Spleisskassetten (6), mit einem Aufteilbereich (7), in welchem das Glasfaserkabel (5) aufgeteilt ist und mit Kabelführungen (20) zur Führung der zu Bündeln (12) zusammengefassten Glasfasern, die für die Einhaltung von Mindestradien sorgen, **dadurch gekennzeichnet, dass** im Gehäuse (2) mehrere jeweils mit einem Deckel (10) verschliessbare und abschliessbare Kundenspleisskästen (9) angeordnet sind, in denen jeweils wenigstens eine Spleisskassette (6) untergebracht ist und dass der Aufteilbereich (7) des Glasfaserkabels (5) im Gehäuse (2) geschützt angeordnet ist.

2. Ausstiegskasten nach Anspruch 1, **dadurch gekennzeichnet, dass** der Aufteilbereich (7) hinter den Kundenspleisskästen (9) angeordnet ist.

3. Ausstiegskasten nach Anspruch 1 oder 2, **dadurch gekennzeichnet, dass** mehrere sich vertikal erstreckende Kundenspleisskästen (9) im wesentlichen ohne Zwischenraum nebeneinander angeordnet sind und im wesentlichen die gesamte Breite des Gehäuses (2) einnehmen.

4. Ausstiegskasten nach einem der Ansprüche 1 bis 3, **dadurch gekennzeichnet, dass** der Eingang (3) und der Ausgang (4) in einer gemeinsamen Öffnung (8) des Gehäuses (2) angeordnet sind und dass das Glasfaserkabel (5) spleissfrei als Schlaufe in diese Öffnung (8) eingeführt und in dieser abgedichtet ist.

5. Ausstiegskasten nach einem der Ansprüche 1 bis 5, **dadurch gekennzeichnet, dass** die Kundenspleisskästen (9) in einer ersten hintersten Ebene (14) eine Ablage für nicht benutzte Bündelader (12) eine zweite, mittlere Ebene (15) für später benützbare Bündelader und eine vordere dritte Ebene (16) mit mehreren Kassettenträgern (19) aufweist.

6. Ausstiegskasten nach Anspruch 5, **dadurch gekennzeichnet, dass** jeder Kundenspleisskasten (9) mit einem eigenen Schloss (11) und Schlüssel (25) versehen ist.
